(19) Europäisches Patentamt
European Patent Office
Office européen des brevets

(11) **EP 1 898 581 A1**

(12) **DEMANDE DE BREVET EUROPEEN**

(43) Date de publication:
**12.03.2008 Bulletin 2008/11**

(51) Int Cl.:
***H04L 25/02*** *(2006.01)*

(21) Numéro de dépôt: **07115033.8**

(22) Date de dépôt: **27.08.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **08.09.2006 FR 0653625**

(71) Demandeur: **France Télécom**
**75015 Paris (FR)**

(72) Inventeurs:
• **Le Saux, Benoît**
**FRANCE TELECOM, ILE DE FRANCE**
**35512, CESSON SEVIGNE (FR)**

• **Helard, Maryline**
**FRANCE TELECOM, ILE DE FRANCE**
**35700, RENNES (FR)**
• **Doukopoulos, Xénophon**
**FRANCE TELECOM, ILE DE FRANCE**
**38000, GRENOBLE (FR)**

(74) Mandataire: **Jeune, Pascale**
**France Télécom R&D/VAT/PI**
**38-40, rue du Général-Leclerc**
**92794 Issy Moulineaux Cedex 9 (FR)**

(54) **Procédé et module d'estimation des canaux de transmission d'un système multi-antennes multi-porteuses**

(57)    La présente invention se rapporte à un procédé (1) et à un module d'estimation des canaux de transmission dans un système multi-antennes. Le procédé et le module calculent (2) une matrice A construite sous forme de blocs à partir de séquences d'apprentissage et de la matrice de Fourier adaptée. Pour une antenne de réception considérée $RX^j$, le procédé et le module calculent (3) $N_t$ réponses impulsionelles dans le domaine temporel en multipliant $N_p$ symboles pilotes, extraits d'un signal fréquentiel $R^j(n)$ obtenu après démodulation d'un signal temporel reçu par l'antenne de réception considérée $RX_j$, avec un produit de matrices comprenant le pseudo inverse du produit de l'hermitien de la matrice A par A permettant d'effectuer une décorrélation des porteuses modulées voisines de porteuses nulles.

Fig. 2

EP 1 898 581 A1

**Description**

La présente invention se rapporte au domaine des télécommunications. Au sein de ce domaine, l'invention se rapporte plus particulièrement aux communications dites numériques. Les communications numériques comprennent en particulier les communications sans fil par voie hertzienne ainsi que les communications filaires. Le support de transmission des communications est couramment appelé canal de transmission ou de propagation, à l'origine en référence à un canal aérien et par extension en référence à tout canal.

L'invention concerne l'émission et la réception, et notamment l'estimation des canaux de transmission dans un système multi-antennes de type MIMO ("Multiple Input Multiple Output " pour " Entrées Multiples Sorties Multiples") ou MISO ("Multiple Input Single Output" pour "Entrées Multiples Sortie Unique") mettant en oeuvre des porteuses multiples et une égalisation dans le domaine fréquentiel. Dans un système à plusieurs antennes d'émission ou de réception, il y a autant de canaux de transmission que de paires (antenne d'émission-antenne de réception). L'estimation consiste à estimer la réponse impulsionelle de chacun de ces canaux. L'invention s'applique aux systèmes multi-antennes multi porteuses mettant en oeuvre au moins deux antennes d'émission.

Ces systèmes mettent en oeuvre une trame de longueur déterminée dont le contenu, en entrée du dispositif d'émission, est constitué de symboles de données utiles c'est-à-dire de symboles qui codent l'information d'un signal d'entrée et, en sortie du même dispositif, est réparti en temps et en fréquence lors de l'émission sur plusieurs porteuses. On parle alors d'une trame temps-fréquence qui détermine dans le temps l'emplacement des symboles de données utiles et de symboles pilotes sur les différentes porteuses. En outre, la présence de plusieurs antennes d'émission permet d'introduire de la diversité spatiale en multiplexant les données utiles entre ces antennes. Dans la suite du document, les données désignent les données utiles.

L'invention peut s'appliquer aux communications sur voie montante (d'un terminal vers une station de base), ainsi qu'aux communications sur voie descendante (d'une station de base vers un terminal).

Un exemple d'application de l'invention est le domaine des communications fixes ou radio mobiles, notamment pour les systèmes de quatrième génération et suivantes typiquement dits B3G(acronyme de Beyond 3rd Generation). Ces systèmes comprennent en particulier les systèmes MC-CDMA ("Multi-Carrier Coded Division Multiple Access"), OFDMA ("Orthogonal Frequency Division Multiple Access") en voie descendante ou montante avec un schéma de transmission de type MIMO ("Multiple Input Multiple Output"), dans lesquels les données à transmettre sont réparties dans des temps-fréquence comportant des symboles pilotes et éventuellement des porteuses nulles. L'invention s'applique en particulier à tout type de système avec modulation OFDM par exemple de type OFDMA, LP-OFDM, ou à des systèmes de type IFDMA.

Les procédés d'émission classiques comprennent une étape de modulation. Dès lors qu'une modulation différentielle (système non-cohérent) n'est pas utilisée, il est impératif pour le récepteur d'estimer le canal de propagation (système cohérent), afin de pouvoir égaliser le signal reçu et détecter les bits émis. Les modulations différentielles appliquées aux systèmes multi antennes ne sont pas considérées actuellement comme des candidates prometteuses pour des systèmes de communication à haut débit. En effet, elles doublent le niveau de bruit ce qui a pour résultat une dégradation de la performance de l'ordre de 3dB.

L'estimation de canal est donc particulièrement importante pour les systèmes multi antennes car les performances de ces systèmes sont directement liées à l'estimation de canal au niveau du récepteur. Cette estimation doit en outre permettre d'estimer les différents canaux reliant chaque antenne d'émission à chaque antenne de réception indépendamment les uns des autres. Les performances des systèmes multi antennes sont en outre contraintes par la présence de symboles pilotes qui entraîne une perte d'efficacité spectrale.

On connaît déjà plusieurs techniques d'estimation des canaux de transmission dans un système multi-antennes comprenant plusieurs antennes d'émission. Parmi ces techniques, on distingue celles qui reposent sur l'exploitation de symboles de référence, dits pilotes, insérés dans la trame temps fréquence lors de l'émission. Ces pilotes sont connus du récepteur et permettent à ce dernier d'estimer les canaux de transmission correspondant à chacune des antennes d'émission. Théoriquement, la capacité des systèmes MIMO augmente linéairement avec le minimum du nombre d'antennes en émission et en réception. Dans la pratique, l'efficacité spectrale utile se trouve d'autant plus réduite que ce nombre d'antennes augmente à cause de la présence nécessaire de symboles pilotes dans la trame.

Différentes techniques existent pour insérer des symboles pilotes dans la trame temps fréquence émise par une antenne. Pour une même trame temps fréquence, l'ensemble des symboles pilotes forme une séquence d'apprentissage.

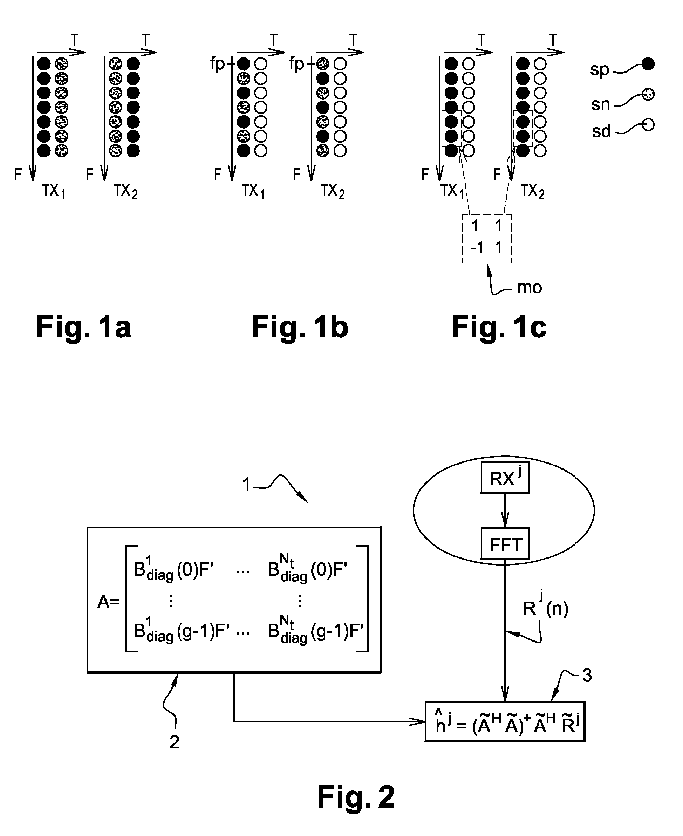

Une première technique, illustrée par la figure 1a, décrite dans l'article de Y. Teng, K. Mori, et H. Kobayashi "Performance of DCT Interpolation-based Channel Estimation Method for MIMO-OFDM Systems," ISCIT, Oct. 2004, insère un symbole OFDM pilote successivement en temps sur chaque antenne d'émission et met à zéro les symboles OFDM concomitants en temps à un symbole OFDM pilote pour toutes les autres antennes d'émission. Un symbole OFDM pilote est un symbole OFDM contenant des symboles pilotes. Dans ce type de trame particulier, un symbole OFDM pilote comprend uniquement des symboles pilotes. La ligure 1a illustre cette technique de construction de trames de type 1 dans le cas de deux antennes d'émission TX1 et TX2. Au premier temps symbole OFDM, un symbole OFDM pilote est émis par l'antenne d'émission TX1 et simultanément le symbole OFDM émis par l'antenne TX2 comporte uniquement des porteuses nulles typiquement modulées par des symboles nuls sn. Au deuxième temps symbole OFDM, un symbole OFDM pilote est émis par l'antenne d'émission TX2 et simultanément le symbole OFDM émis par l'antenne TX1 comporte uniquement des porteuses nulles typiquement modulées par des symboles nuls sn. Cette technique implique une diminution de l'efficacité spectrale de l'ensemble des antennes d'émission en comparaison avec une trame mono antenne. En effet, cette technique nécessite un nombre de symboles OFDM pour effectuer l'estimation de canal égal au nombre d'antennes d'émission et, par, conséquent le nombre de symboles OFDM pilotes présents dans une trame SISO (acronyme de Single Input Single Output) est multiplié par le nombre d'antennes en émission.

Une deuxième technique, illustrée par la figure 1b, décrite dans l'article de J. Moon, H. Jin, T. Jeon et S.-K. Li "Channel estimation for MIMO-OFDM Systems employing Spatial Multiplexing," Vehicular Technology Conference, Vol. 5, Sept. 2004 consiste, pour un même temps symbole OFDM, à émettre un symbole pilote pour une fréquence porteuse fp déterminée sur une antenne d'émission et un symbole nul sn pour cette même fréquence sur les autres antennes d'émission ce qui évite des interférences avec le symbole pilote sp en réception. La figure 1b illustre cette technique de construction de trames de type 2 dans le cas de deux antennes d'émission TX1 et TX2. Cette technique revient à utiliser des ensembles de sous-porteuses disjoints pour les séquences d'apprentissage émises sur les différentes antennes. Ce type de construction entraîne une perte d'efficacité spectrale du fait de la présence de symboles nuls sn imposés dans un symbole OFDM concomitant en temps avec un symbole OFDM comportant des symboles pilotes sp. Après émission d'un symbole OFDM pilote, TX1 respectivement TX2, peut émettre des symboles de données sd sur les différentes fréquences porteuses.

Une troisième technique, illustrée par la figure 1c, décrite dans l'article de E.G. Larsson, et J. Li, "Preamble Design for Multiple-Antenna OFDM-Based WLANs With Null Subcarriers," IEEE Signal Processing, Vol. 13, No. 5, 2006 implique une construction des séquences d'apprentissage par codage espace-fréquence de type Alamouti. La figure 1c illustre cette technique de construction de trames de type 3 dans le cas de deux antennes d'émission TX1 et TX2. Un inconvénient majeur d'une telle technique est qu'elle augmente, du fait du motif orthogonal mo, le nombre de symboles pilotes sp dans un symbole OFDM en comparaison avec une trame SISO et qu'elle suppose le canal constant sur un certain nombre de sous-porteuses.

Pour lever les contraintes des techniques précédentes, pour certaines liées à la présence imposée de symboles nuls, pour conserver entre les différentes antennes d'émission la disposition des symboles pilotes d'une trame mono antenne et pour utiliser le même ensemble de sous-porteuses pour l'ensemble des fréquences pilotes une solution connue consiste à mettre en oeuvre le principe suivant qui consiste à émettre sur chaque antenne d'émission une impulsion, ou plus généralement une séquence de référence, décalée dans le temps de sorte que le récepteur au niveau de chaque antenne de réception puisse isoler dans le domaine temporel les réponses impulsionelles des différents canaux de transmission.

Ce principe est appliqué dans les techniques décrites dans l'article de M.-S.Baek, H.-J. Kook, M.-J. Kim, Y.-H. You, et H-S. Song, "Multi-Antenna Scheme for High Capacity Transmission in the Digital Audio Broadcasting," IEEE Transactions on Broadcasting, Vol. 51, No. 4, Dec. 2005 et dans l'article de I. Barhumi, G. Leus, et M. Moonen, "Optimal Training Design for MIMO OFDM Systems in Mobile Wireless Channels," IEEE Transactions on Signal Processing, Vol. 51, No. 6, June 2003. Dans le premier article, l'ensemble des sous-porteuses d'un symbole OFDM est dédié à l'estimation de canal, ce qui permet au récepteur de récupérer avant la démodulation OFDM les différentes réponses impulsionelles. Par contre, dans le second article, le multiplexage des symboles de données utiles et des symboles pilotes, ces derniers répartis sur un ou plusieurs symboles OFDM pour former une séquence d'apprentissage, implique que l'opération de récupération des réponses impulsionelles en réception se fasse après la démodulation OFDM. Cette opération met en oeuvre une matrice A construite à partir de la séquence d'apprentissage et de la matrice de Fourier de dimension adaptée. L'estimation des coefficients des différentes réponses impulsionelles consiste à multiplier le signal reçu démodulé par la pseudo inverse de cette matrice A.

La technique de Baek présente l'avantage sur la technique de Teng d'éviter la présence imposée de symboles pilotes nuls et offre donc une plus grande efficacité spectrale. Par rapport à la technique de Moon, elle permet avantageusement d'estimer le canal pour l'ensemble des porteuses modulées. La technique de Barhumi offre une plus grande efficacité spectrale par rapport aux techniques respectivement de Teng, Moon et de Larsson, le tableau 1 en annexe A est un tableau comparatif du nombre de données utiles pour un nombre donné de symboles OFDM par trame pour les différentes techniques précédentes, pour deux antennes d'émission.

Toutefois, les techniques de Baek et de Barhumi présentent de mauvaises performances dans le cas où les trames temps fréquence à émettre comportent des porteuses nulles en bordure de spectre, ces porteuses nulles en bordure étant typiquement utilisées pour réduire l'occupation spectrale du signal émis pouvant interférer avec des bandes avoisinantes. Dans ce cas, ces techniques entraînent des effets de bord qui induisent une dégradation des performances du système par rapport à un système doté d'une estimation de canal parfaite.

Aussi, le problème technique à résoudre par l'objet de la présente invention est de proposer un procédé d'estimation des canaux de transmission dans un système multi-antennes, un tel système mettant en oeuvre $N_t$ antennes d'émission, où $N_t$ est supérieur ou égale à 2, au moins une antenne de réception, une trame temps fréquence par antenne d'émission comprenant des symboles pilotes formant une séquence d'apprentissage et des symboles de données d'un signal utile, les $N_t$ séquences d'apprentissage, décalées temporellement entre elles, étant connues du récepteur et permettant à ce dernier d'estimer $N_t$ réponses impulsionelles correspondant aux $N_t$ canaux de transmission séparant respectivement une antenne d'émission de l'antenne de réception considérée $Rx_j$, les symboles de données et les symboles pilotes étant modulés en fréquence par un multiplexeur orthogonal pour former des symboles orthogonaux qui sont émis par les antennes d'émission sous la forme d'un signal multi porteuses à $N_{FFT}$ porteuses avec Np porteuses pilotes et des porteuses nulles, qui repose sur le principe précédemment rappelé avec mise en oeuvre d'une matrice A et qui n'entraine pas les effets de bord des techniques connues.

Une solution au problème technique posé consiste, selon la présente invention, en ce que la matrice A est construite sous forme de blocs à partir des séquences d'apprentissage et de la matrice de Fourier de dimensions $N_{FFTX}$ $N_{FFT}$ et en ce que le procédé comprend, pour une antenne de réception considérée :

- une étape de calcul des $N_t$ réponses impulsionelles dans le domaine temporel en multipliant $N_p$ symboles pilotes, extraits d'un signal fréquentiel $R^j(n)$ obtenu après démodulation d'un signal temporel reçu par l'antenne de réception $Rx_j$ considérée au moyen d'une FFT de taille $N_{FFT}$, avec un produit de matrices comprenant le pseudo inverse du produit de l'hermitien de la matrice A par A permettant d'effectuer une décorrélation des porteuses modulées voisines de porteuses nulles.

En outre, l'invention a pour objet un module d'estimation des canaux de transmission dans un système multi-antennes. Ledit dispositif comprend :

- des moyens pour calculer une matrice A construite sous forme de blocs à partir des séquences d'apprentissage et de la matrice de Fourier de dimensions $N_{FFTX}$ $N_{FFT}$ et, pour une antenne de réception considérée,
- des moyens pour calculer $N_t$ réponses impulsionelles dans le domaine temporel en multipliant $N_p$ symboles pilotes, extraits d'un signal fréquentiel $R^j(n)$ obtenu après démodulation d'un signal temporel reçu par l'antenne de réception $Rx_j$ considérée au moyen d'une FFT de taille $N_{FFT}$, avec un produit de matrices comprenant le pseudo inverse du produit de l'hermitien de la matrice A par A permettant d'effectuer une décorrélation des porteuses modulées voisines de porteuses nulles..

Le procédé et le module d'estimation de canaux conformes à l'invention résolvent le problème posé. En effet, ils permettent de décorréler en réception les porteuses modulées voisines de porteuses nulles.

Selon un mode de réalisation particulier, le calcul des $N_t$ réponses impulsionelles est limité aux $N_p$ porteuses pilotes. Selon une variante, le calcul est en outre limité au plus petit décalage temporel entre deux antennes. Ces limitations permettent avantageusement de limiter les calculs et donc de réduire la puissance de calcul nécessaire pour la mise en oeuvre du procédé.

Selon un mode de réalisation particulier, l'étape de calcul des $N_t$ réponses impulsionelles est répétée pour chaque antenne de réception considérée du système multi-antennes. Ce mode est particulièrement adapté à des systèmes comprenant plusieurs antennes de réception.

En outre, l'invention a pour objet un récepteur pour un système multi-antennes. Le récepteur comprend un module d'estimation des canaux de transmission selon un objet précédent.

En outre, l'invention a pour objet un système multi-antennes comprenant un récepteur selon l'objet précédent.

Dans le cadre de l'invention, le système multi antennes à au moins deux antennes d'émission est aussi bien un système MIMO, qu'un système MISO. Dans la suite du document, un système MIMO doit être compris comme un système à plusieurs antennes d'émission quel que soit le nombre d'antennes de réception ($N_r \geq 1$)

Selon une implémentation préférée, les étapes du procédé sont déterminées par les instructions d'un programme d'estimation incorporé dans un circuit électronique telle une puce elle-même pouvant être disposée dans un dispositif électronique tel un émetteur. Le procédé selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme d'estimation peut être traduit en une forme transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

D'autres caractéristiques et avantages de l'invention apparaîtront lors de la description qui suit faite en regard de figures annexées données à titre d'exemples non limitatifs.

Les figure 1a, 1b et 1c sont des illustrations de constructions de trames connues respectivement de type 1, 2 et 3 pour un système à deux antennes d'émission.

La figure 2 est un organigramme d'un procédé d'estimation selon l'invention.

La figure 3 est un schéma d'un système de transmission particulier selon l'invention permettant la mise en oeuvre d'un procédé selon l'invention.

La figure 4 est une représentation graphique de résultats de simulation.

Les figures 5a, 5b, 5c donnent le tracé de la partie réelle du coefficient du canal en fonction de l'indice de porteuse.

La figure 2 est un organigramme d'un procédé d'estimation selon l'invention.

Un procédé d'estimation selon l'invention permet d'estimer des canaux de transmission dans un système multi-antennes. Un canal de transmission sépare une antenne d'émission $TX_i$ d'une antenne de réception $RX_j$. Un système multi-antennes met en oeuvre $N_t \geq 2$ antennes d'émission, au moins une antenne de réception et une trame temps fréquence par antenne d'émission. Une trame temps-fréquence détermine dans le temps l'emplacement des symboles de données utiles et des symboles pilotes sur les différentes porteuses. La trame temps fréquence peut comporter en outre des symboles nuls mais comme ils n'interviennent pas dans le procédé d'estimation, ils sont ignorés dans la description. La description ne prend pas non plus en compte les porteuses de garde qui n'interviennent pas non plus dans le procédé d'estimation. Pour une même antenne d'émission, les symboles pilotes forment une séquence d'apprentissage. Les $N_t$ séquences d'apprentissage sont décalées entre elles d'un intervalle temporel. Elles sont connues du récepteur et elles permettent à ce dernier d'estimer $N_t$ réponses impulsionelles qui correspondent aux $N_t$ canaux de transmission. Les symboles de données et les symboles pilotes sont modulés en fréquence par un multiplexeur orthogonal pour former des symboles orthogonaux qui sont émis par l'antenne d'émission reliée au multiplexeur orthogonal, sous la forme d'un signal multi porteuses à $N_{FFT}$ porteuses avec $N_p$ porteuses pilotes et des porteuses nulles. Les symboles pilotes peuvent être répartis, selon la trame temps fréquence considérée, sur un ou plusieurs symboles orthogonaux. La modulation est selon un mode de réalisation particulier une modulation OFDM.

Un procédé d'estimation selon l'invention intervient en réception après une étape de démodulation. La démodulation démodule un signal temporel reçu par l'antenne de réception $RX^j$ considérée au moyen d'une FFT de taille $N_{FFT}$, pour obtenir un signal fréquentiel $R^j(n)$ et en extraire Np symboles pilotes. Selon une réalisation particulière, la démodulation est une démodulation OFDM. Typiquement la taille de la FFT, $N_{FFT}$ est déterminée en fonction de la taille de la FFT inverse effectuée lors de l'émission. Les tailles sont choisies typiquement identiques.

Le procédé d'estimation 1 selon l'invention comprend une étape 2 de calcul d'une matrice A et, pour une antenne de réception $RX^j$ considérée, une étape 3 de calcul des $N_t$ réponses impulsionelles dans le domaine temporel des $N_t$ canaux séparant respectivement une antenne d'émission $TX^i$ de l'antenne de réception $RX^j$. Pour obtenir les $N_r$ x $N_t$ canaux, il faut répéter l'étape 3 pour les différentes antennes de réception $RX^j$.

L'étape 2 de calcul calcule une matrice A construite sous forme de blocs à partir des séquences d'apprentissage et de la matrice de Fourier de dimensions $N_{FFT}$x $N_{FFT}$.

L'étape 3 de calcul des $N_t$ réponses impulsionelles dans le domaine temporel multiplie les $N_p$ symboles pilotes avec un produit de matrices comprenant le pseudo inverse du produit de l'hermitien de la matrice A par A. Cette multiplication avec ce produit de matrices particulières permet d'effectuer une décorrélation des porteuses modulées voisines de porteuses nulles.

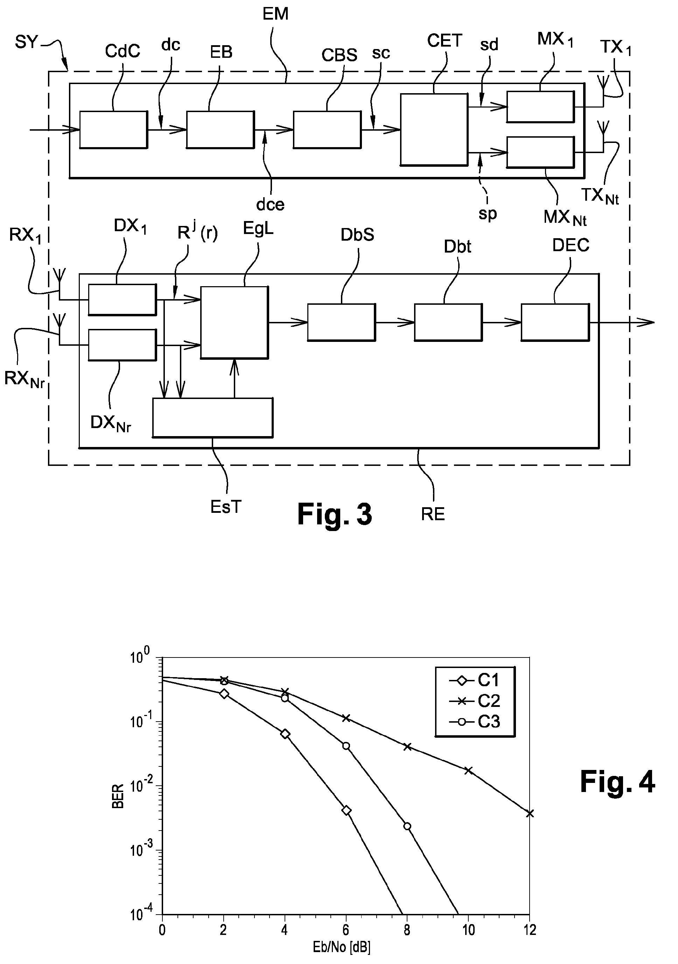

La figure 3 est un schéma d'un système de transmission particulier permettant la mise en oeuvre d'un procédé selon l'invention.

Le système SY de transmission comprend un dispositif d'émission EM multi porteuses et un dispositif de réception RE. Le dispositif d'émission EM est relié à Nt antennes d'émission $TX_1,...,TX_{Nt}$, avec $Nt \geq 2$. Le dispositif de réception RE est relié à Nr antennes de réception $RX_1,... ,RX_{Nr}$, avec $Nr \geq 1$.

Selon l'exemple illustré, le dispositif d'émission EM comprend un module de codage canal CdC, un entrelaceur bits EB, un module de codage binaire à symbole CBS, un module de codage espace-temps CET, autant de multiplex OFDM MX que d'antennes d'émission.

Le module de codage de canal CdC code des données sources d'entrée, correspondant à un ou plusieurs signaux typiquement de télécommunication, pour fournir en sortie des données codées de, par exemple avec un code convolutionnel.

L'entrelaceur bits entrelace, selon une loi d'entrelacement déterminée, les bits des données codées pour fournir des données codées entrelacées dce.

Le module de codage binaire à symbole CBS transforme les données codées entrelacées dce en symboles de données complexes sc, par exemple par une modulation BPSK, QPSK ou 16QAM.

Le module de codage espace-temps CET détermine à partir des symboles de données complexes sc une matrice à deux dimensions de symboles de données sd, selon un codage par exemple de type Alamouti, et génère des symboles pilotes.

Chaque multiplex OFDM effectue une modulation des symboles de données sd et de symboles pilotes sp, insérés en entrée du multiplex, par des sous-porteuses sinusoïdales dont les fonctions orthogonales sont les composantes de Fourier conjuguées d'une transformation de Fourier inverse de taille $N_{FFT}$ correspondant au nombre de porteuses d'un multiplex OFDM. Les $N_{FFT}$ porteuses comprennent $N_{mod}$ porteuses de données modulées et Np porteuses pilotes. L'ensemble formé de $N_{FFT}$ porteuses est appelé symbole OFDM. Le symbole OFDM peut comporter des porteuses nulles et des porteuses de garde non modulées. La sortie d'un multiplex OFDM constitue le signal OFDM en temps sans intervalle de garde.

Avant émission, le dispositif d'émission insère un intervalle de garde au signal OFDM.

Les signaux émis comportent des séquences de référence. Pour chaque antenne d'émission considérée, une séquence de référence est déterminée par les symboles pilotes contenus dans un ou plusieurs symboles OFDM, soit g le nombre de ces symboles OFDM. La séquence est donc déterminée par le nombre g, l'amplitude des symboles pilotes et les porteuses pilotes. Les séquences de référence sont identiques entre elles mais décalées entre elles dans le temps d'un intervalle $\Delta t$ au moins égal à la longueur maximale L des canaux de transmission, $\Delta_t \geq L$, pour que les réponses impulsionelles des différents canaux n'interfèrent pas entre elles. On appelle longueur d'un canal la durée de transmission du canal ou encore le retard introduit par le canal lors de la transmission. L'intervalle $\Delta t$ doit être compris comme étant un nombre d'intervalles temporels séparant des échantillons. Le décalage temporel entre séquences de référence est typiquement effectué avant la modulation OFDM par déphasage dans le domaine fréquentiel des symboles pilotes intervenant dans différentes séquences de référence.

Soit $c(p)$, $p = 0,..., N_P$ - 1 le symbole pilote émis sur la fréquence porteuse d'indice p sur l'antenne d'émission $TX_1$. Le symbole pilote émis au même temps symbole OFDM sur l'antenne $TX_i$ est égal à :

$$c(p)^i = c(p)\, \mathrm{e}^{-j2\pi \frac{p(i-1)\Delta_t}{N_P}} \tag{1}$$

D'autre part, la condition pour déterminer l'ensemble des réponses impulsionelles est $N_t \times \Delta t \leq N_P$.

Selon l'exemple illustré, le dispositif de réception RE comprend autant de démultiplex OFDM $DX_1,...,DX_{Nr}$ que d'antennes de réception $RX_1,...,RX_{Nr}$. Il comprend en outre un module d'estimation des canaux EsT, un module d'égalisation EgL, un module de décodage binaire à symbole DbS, un desentrelaceur bits Dbt, un module de décodage canal DEC.

Chaque signal reçu par une antenne de réception est traité par un démultiplex OFDM. Un démultiplex OFDM effectue la fonction inverse d'un multiplex OFDM. Ainsi, un démultiplex OFDM effectue une transformée de Fourier direct de taille $N_{FFT}$ du signal reçu, après suppression de l'intervalle de garde. Un démultiplex OFDM démodule un signal temporel reçu par l'antenne de réception $RX_j$ considérée au moyen d'une FFT de taille $N_{FFT}$, pour obtenir un signal fréquentiel $R^j(n)$ et en extraire Np symboles pilotes.

Les sorties des démultiplexeur OFDM fournissent des signaux OFDM $R^j(n)$ dans le domaine fréquentiel qui sont exploités par le module d'estimation et par le module d'égalisation.

A l'instant n, le signal issu de l'antenne de réception $RX_j$ peut s'exprimer dans le domaine fréquentiel, c'est-à-dire après suppression de l'intervalle de garde et après démodulation OFDM, sous la forme d'un vecteur colonne de dimension $N_{FFT}$ :

$$\mathbf{R}^j(n) = \sum_{i=1}^{N_t} \mathrm{diag}\left\{\mathbf{X}^i(n)\right\} \mathbf{F}\mathbf{h}^{j,i} + \Xi^j(n) \tag{2}$$

avec X' (n) un vecteur de dimension $N_{FFT}$, le symbole OFDM émis à l'instant n sur l'antenne $TX_i$,

F la matrice de Fourier de taille $N_{FFT}xN_{FFT}$,

$h^{j,i}(n)$ le vecteur colonne représentant les *L* échantillons de la réponse fréquentielle du sous-canal reliant l'antenne d'émission $TX_i$ à l'antenne de réception $RX_j$, et

$\Xi^j(n)$ le vecteur colonne de dimension $N_{FFT}$ représentant la transformée de Fourier d'un bruit additif blanc gaussien.

Pour simplifier avantageusement les calculs, le procédé d'estimation exploite le signal démodulé selon l'expression (2) uniquement sur la durée $\Delta t$ :

$$\mathbf{R}^j(n) = \sum_{i=1}^{N_t} \text{diag}\left\{\mathbf{X}^i(n)\right\} F'h^{'j,i} + \Xi^j(n) \qquad (3)$$

F' la matrice contenant les $\Delta t$ premières colonnes de la matrice de Fourier F de taille $N_{FFT}XN_{FFT}$, $h^{'i,j}$ un vecteur colonne de taille $\Delta t$ tel que :

$$h^{'j,i} = \left[ \mathbf{h}^{j,i^T}, \mathbf{0}_{\Delta t - L} \right]^T \qquad (4)$$

La notation diag$\{\mathbf{x}\}$ désigne une matrice diagonale ayant le vecteur colonne **x** sur sa diagonale :

$$\text{diag}\begin{bmatrix} a \\ b \\ c \end{bmatrix} = \begin{bmatrix} a & 0 & 0 \\ 0 & b & 0 \\ 0 & 0 & c \end{bmatrix} \qquad (5)$$

La matrice de Fourier F est carrée, de dimensions $N_{FFT}xN_{FFT}$, et de forme suivante :

$$\mathbf{F} = \frac{1}{\sqrt{N_{FFT}}} \begin{bmatrix} 1 & 1 & 1 & \dots & 1 \\ 1 & w_{N_{FFT}} & w_{N_{FFT}}^2 & \dots & w_{N_{FFT}}^{N_{FFT}-1} \\ \vdots & \vdots & \vdots & \dots & \vdots \\ 1 & w_{N_{FFT}}^{N_{FFT}-1} & w_{N_{FFT}}^{2(N_{FFT}-1)} & \dots & w_{N_{FFT}}^{(N_{FFT}-1)(N_{FFT}-1)} \end{bmatrix} \qquad (6)$$

où $w_{N_{FFT}} = e^{-j\frac{2\pi}{N_{FFT}}}$. La matrice F est directement déduite de F :

$$F' = \frac{1}{\sqrt{N_{\text{FFT}}}} \begin{bmatrix} 1 & 1 & 1 & \ldots & 1 \\ 1 & w_{N_{\text{FFT}}} & w_{N_{\text{FFT}}}^2 & \ldots & w_{N_{\text{FFT}}}^{\Delta t - 1} \\ \vdots & \vdots & \vdots & \ldots & \vdots \\ 1 & w_{N_{\text{FFT}}}^{N_{\text{FFT}} - 1} & w_{N_{\text{FFT}}}^{2(N_{\text{FFT}} - 1)} & \ldots & w_{N_{\text{FFT}}}^{(\Delta t - 1)(\Delta t - 1)} \end{bmatrix} \tag{7}$$

Chaque symbole OFDM émis à l'instant n par l'antenne d'émission $TX_i$, $\mathbf{X}^i(n)$, peut être décomposé en un vecteur contenant les symboles de données et un vecteur contenant les symboles pilotes :

$$\mathbf{X}^i(n) = \mathbf{S}^i(n) + \mathbf{B}^i(n) \tag{8}$$

avec $\mathbf{S}^i(n)$ le vecteur des symboles de données utiles de dimension $N_{\text{FFT}}$ et $\mathbf{B}^i(n)$ le vecteur des symboles pilotes de même dimension.

L'équation (3) peut donc s'exprimer sous la forme :

$$\mathbf{R}^j(n) = \sum_{i=1}^{N_t} \text{diag}\left\{\mathbf{S}^i(n) + \mathbf{B}^i(n)\right\} F'\mathbf{h}^{'j,i} + \Xi^j(n) \tag{9}$$

Sachant que $\Delta t \geq L$, il peut être imposé $\Delta t = L$. Avec cette condition, l'accumulation des vecteurs reçus, correspondants aux g symboles orthogonaux émis contenant des symboles pilotes composant une séquence d'apprentissage, peut s'exprimer sous la forme :

$$\begin{aligned} \mathbf{R}^j &= \left[\mathbf{R}^j(0)^T \ldots \mathbf{R}^j(g\text{-}1)^T\right]^T \\ &= \mathbf{T}\mathbf{h}^{'j} + \mathbf{A}\mathbf{h}^{'j} + \Xi^j \end{aligned} \tag{10}$$

avec $\mathbf{R}^j$ un vecteur colonne de dimension $N_{\text{FFT}}$xg,

$\mathbf{T}$ une matrice de dimensions $(N_{\text{FFT}} \times_g) \times (N_t \times \Delta t)$ contenant les symboles de donnée utiles pendant les séquences d'apprentissage (des $N_t$ antennes d'émission),

$$\mathbf{T} = \begin{bmatrix} \mathbf{S}_{\text{diag}}^1(0)F' & \ldots & \mathbf{S}_{\text{diag}}^{N_t}(0)F' \\ \vdots & & \vdots \\ \mathbf{S}_{\text{diag}}^1(g\text{-}1)F' & \ldots & \mathbf{S}_{\text{diag}}^{N_t}(g\text{-}1)F' \end{bmatrix} \tag{11},$$

$\mathbf{A}$ une matrice de dimensions $(N_{\text{FFT}}$xg$)$x$(N_t$x$\Delta t)$ contenant les symboles pilotes pendant les séquences d'apprentissage (des $N_t$ antennes d'émission),

$$\mathbf{A} = \begin{bmatrix} \mathbf{B}_{\text{diag}}^1(0)F' & \ldots & \mathbf{B}_{\text{diag}}^{N_t}(0)F' \\ \vdots & & \vdots \\ \mathbf{B}_{\text{diag}}^1(g\text{-}1)F' & \ldots & \mathbf{B}_{\text{diag}}^{N_t}(g\text{-}1)F' \end{bmatrix} \tag{12},$$

$\mathbf{h}^{'j}$ le vecteur colonne de dimension $N_t \times \Delta t$ contenant les $N_t$ réponses impulsionelles,

$$\mathbf{h}^{'j} = \left[ \mathbf{h}^{j,1^T}, \ldots, \mathbf{h}^{j,N_t^{\,T}} \right]^T \tag{13},$$

$\Xi^j$ le vecteur colonne de dimension $N_{FFT} \times g$ contenant g représentations de la transformée de Fourier d'un bruit additif blanc gaussien.

Le module d'estimation des canaux comprend des moyens pour calculer la matrice A selon la relation (12). Ces moyens sont typiquement des instructions d'un programme qui lors d'une implémentation préférée vont être incorporées dans un circuit électronique, un organe de calcul tel un processeur ou équivalent dont le fonctionnement est alors commandé par l'exécution du programme.

Pour estimer le vecteur des réponses impulsionelles à partir du signal reçu $R^j$, Barhumi utilise la relation suivante :

$$\hat{\mathbf{h}}^j = \mathbf{A}^+ \, \mathbf{R}^j \tag{14}$$

où le symbole $^+$ signifie pseudo-inverse. On appelle pseudo-inverse l'opération suivante :

$$\mathbf{A}^+ = \left( \mathbf{A}^H \mathbf{A} \right)^{-1} \mathbf{A}^H \tag{15}$$

Pour éliminer les termes d'interférences dus aux symboles de données présents dans le symbole OFDM, il est nécessaire d'avoir le produit de $\mathbf{A}^+$ et de $\mathbf{T}$ égal à une matrice nulle, ce qui est rendu possible en imposant des ensembles disjoints aux symboles pilotes et aux symboles de données. En outre, le calcul des réponses impulsionelles peut être simplifié en ne considérant dans les équations que les fréquences dédiées à l'estimation de canal, c'est-à-dire en limitant les calculs aux porteuses pilotes :

$$\hat{\mathbf{h}}^j = \tilde{\mathbf{A}}^+ \, \tilde{\mathbf{R}}^j \tag{16}$$

avec $\tilde{\mathbf{R}}^j$ la matrice de dimensions $(N_p \times g) \times 1$ extraite de $\mathbf{R}^j$ en ne considérant que les porteuses pilotes et $\tilde{\mathbf{A}}$ la matrice de dimensions $(Npxg) \times (N_t \times \Delta t)$,

$$\tilde{\mathbf{A}} = \begin{bmatrix} \tilde{\mathbf{B}}_{\mathrm{diag}}^1(0)\tilde{\mathbf{F}}' & \ldots & \tilde{\mathbf{B}}_{\mathrm{diag}}^{N_t}(0)\tilde{\mathbf{F}}' \\ \vdots & & \vdots \\ \tilde{\mathbf{B}}_{\mathrm{diag}}^1(g-1)\tilde{\mathbf{F}}' & \ldots & \tilde{\mathbf{B}}_{\mathrm{diag}}^{N_t}(g-1)\tilde{\mathbf{F}}' \end{bmatrix} \tag{17}$$

Le vecteur estimé $\hat{\mathbf{h}}^j$ est donc un vecteur colonne contenant les $N_t$ réponses impulsionelles. Pour obtenir séparément les différentes réponses fréquentielles des sous-canaux nécessaires pour la phase d'égalisation, le procédé effectue un fenêtrage vectoriel sur le vecteur estimé $\hat{\mathbf{h}}^j$.

Dans le cas où il y a des sous-porteuses nulles aux bordures du spectre, la solution de Barhumi, équations (14) et (16), conduit à des effets de bords, c'est-à-dire des discontinuités en bordure de spectre, ce qui dégrade les performances.

Un procédé selon l'invention effectue une estimation des réponses impulsionelles $\hat{\mathbf{h}}^j$ en utilisant la relation suivante, en lieu et place de la relation (16) :

$$\hat{\mathbf{h}}^{j} = \left(\tilde{\mathbf{A}}^{H}\tilde{\mathbf{A}}\right)^{+}\tilde{\mathbf{A}}^{H}\ \tilde{\mathbf{R}}^{j} \qquad (18)$$

Selon cette relation, l'estimation du vecteur des réponses impulsionelles $\mathbf{h}^j$ est égale au produit du pseudo-inverse du produit de l'Hermitien de $\tilde{\mathbf{A}}$ par $\tilde{\mathbf{A}}$ avec l'Hermitien de $\tilde{\mathbf{A}}$.

La multiplication par le pseudo-inverse de l'Hermitien de $\tilde{\mathbf{A}}$ par $\tilde{\mathbf{A}}$ a pour fonction de décorréler les régions de porteuses modulées et de porteuses nulles.

Le module d'estimation des canaux comprend des moyens pour calculer les $N_t$ réponses impulsionelles $\hat{\mathbf{h}}^j$ selon la relation (18). Ces moyens sont typiquement des instructions d'un programme qui lors d'une implémentation préférée vont être incorporées dans un circuit électronique, un organe de calcul tel un processeur ou équivalent dont le fonctionnement est alors commandé par l'exécution du programme.

Connaissant les paramètres du système multi antennes : la taille de la FFT, $N_{FFT}$, le nombre de porteuses modulées, $N_{mod}$, le décalage entre séquences de référence, $\Delta_t$, le nombre de symboles OFDM pilotes formant une séquence de référence, g, l'amplitude des symboles pilotes, c(p), un procédé et un module d'estimation selon l'invention permettent avantageusement de pré-calculer le produit de matrices correspondant à l'expression :

$$\left(\tilde{\mathbf{A}}^{H}\tilde{\mathbf{A}}\right)^{+}\tilde{\mathbf{A}}^{H} \qquad (19).$$

Selon un mode préféré, le procédé, respectivement le module d'estimation, multiplie ce produit pré-calculé de matrices avec le signal OFDM démodulé pour obtenir une estimée des Nt canaux accumulés dans l'expression $\hat{\mathbf{h}}^j$ selon la relation (18).

Pour obtenir une estimée des NrxNt canaux, il faut répéter le calcul de $\hat{\mathbf{h}}^j$ pour j variant de 1 à Nr.

L'expression vectorielle du canal $\hat{\mathbf{h}}^{j,i}$ séparant l'antenne d'émission i déterminée, pour i prenant une valeur entre 1 et Nt, de l'antenne de réception déterminée, pour j prenant une valeur entre 1 et $N_r$, est obtenue en effectuant une sélection des Np échantillons successifs du vecteur colonne $\hat{\mathbf{h}}^j$, calculé pour l'antenne de réception j, en partant de l'échantillon (i-1)xNp.

Selon un mode particulier de mise en oeuvre du procédé, le calcul des NtxNr réponses impulsionelles précédemment décrit pour les $N_p$ porteuses pilotes est complété par une interpolation qui peut être linéaire en temps ou en fréquence (interpolation de type une dimension, 1 D) pour obtenir les coefficients de chaque canal pour l'ensemble des porteuses modulées avec des données utiles. L'interpolation peut éventuellement être d'un ordre supérieur à un.

Les deux exemples suivants permettent d'illustrer le calcul de l'expression de $\tilde{\mathbf{A}}$ et, pour le premier exemple, en outre de l'expression (19) : $(\tilde{\mathbf{A}}^{H}\tilde{\mathbf{A}})^{+}\tilde{\mathbf{A}}^{H}$. Premier exemple. Les paramètres du système prennent les valeurs suivantes : $N_{FFT}$ =8, $N_{mod}$=6, et $\Delta_t$=2. Les sous-porteuses non modulées sont supposées situées aux deux extrémités du spectre. Un seul symbole OFDM est supposé nécessaire à l'estimation de canal, g=1, et le motif de ce symbole OFDM, qui constitue une séquence de référence est représenté sur le Tab. 2. La première colonne représente les indices fréquentiels et la seconde le type de données associé (N porteuse nulle, P symbole pilote et D donnée utile).

| 0 | N |
|---|---|
| 1 | P |
| 2 | D |
| 3 | P |
| 4 | D |
| 5 | P |
| 6 | P |

(suite)

| 7 | N |
|---|---|
| Tableau 2 :Motif des pilotes répartis dans le plan temps-fréquence. | |

Le système de transmission comprend $N_t=2$ antennes d'émission et $N_r=1$ antenne de réception. L'équation (2) donne l'expression du symbole pilote modulant la porteuse p en ce qui concerne la séquence de référence émise par l'antenne d'émission $TX_i$, avec i = 1 ou 2 :

$$c(p)^1 = c(p)\, \mathrm{e}^{-j2\pi\frac{p(1-1)2}{4}} = c(p)$$

$$c(p)^2 = c(p)\, \mathrm{e}^{-j2\pi\frac{p2}{4}} = c(p)\, \mathrm{e}^{-j\pi p}$$

$c(p)^1$ est donc le symbole pilote modulant la fréquence porteuse *p* en ce qui concerne la séquence de référence émise par l'antenne d'émission $TX_1$ et $c(p)^2$ est le symbole pilote modulant la fréquence porteuse *p* en ce qui concerne la séquence de référence émise par l'antenne d'émission $TX_2$.

Pour l'exemple, $c(p) = 1$ pour l'ensemble des porteuses pilotes. Les vecteurs des symboles pilotes $B^1$ et $B^2$ et les vecteurs extraits limités aux porteuses pilotes $\widetilde{\mathbf{B}}^1$ et $\widetilde{\mathbf{B}}^2$ s'expriment alors sous la forme :

$$\mathbf{B}^1 = \begin{bmatrix} 0 \\ 1 \\ 0 \\ 1 \\ 0 \\ 1 \\ 1 \\ 0 \end{bmatrix} \Rightarrow \widetilde{\mathbf{B}}^1 = \begin{bmatrix} 1 \\ 1 \\ 1 \\ 1 \end{bmatrix} \qquad \mathbf{B}^2 = \begin{bmatrix} 0 \\ 1 \\ 0 \\ \mathrm{e}^{-j\pi} \\ 0 \\ \mathrm{e}^{-j2\pi} \\ \mathrm{e}^{-j2\pi} \\ 0 \end{bmatrix} = \begin{bmatrix} 0 \\ 1 \\ 0 \\ -1 \\ 0 \\ 1 \\ -1 \\ 0 \end{bmatrix} \Rightarrow \widetilde{\mathbf{B}}^2 = \begin{bmatrix} 1 \\ -1 \\ 1 \\ -1 \end{bmatrix}$$

La matrice de Fourier F est la suivante :

$$\mathbf{F} = \frac{1}{\sqrt{8}} \begin{bmatrix} 1 & 1 & 1 & 1 & 1 & 1 & 1 & 1 \\ 1 & 0.707-0.707j & -j & -0.707-0.707j & -1 & -0.707+0.707j & j & 0.707+0.707j \\ 1 & -j & -1 & j & 1 & -j & -1 & j \\ 1 & -0.707-0.707j & j & 0.707-0.707j & -1 & 0.707+0.707j & -j & -0.707+0.707j \\ 1 & -1 & 1 & -1 & 1 & -1 & 1 & -1 \\ 1 & -0.707+0.707j & -j & 0.707+0.707j & -1 & 0.707-0.707j & j & -0.707-0.707j \\ 1 & j & -1 & -j & 1 & j & -1 & -j \\ 1 & 0.707+0.707j & j & -0.707+0.707j & -1 & -0.707-0.707j & -j & 0.707-0.707j \end{bmatrix}$$

dans laquelle le symbole *j* représente l'unité imaginaire, c'est-à-dire la solution de l'équation $j^2=-1$. Les matrices F' et $\widetilde{\mathbf{F}}$' s'expriment sous la forme suivante :

$$F' = \frac{1}{\sqrt{8}} \begin{bmatrix} 1 & 1 \\ 1 & 0.707 - 0.707\,j \\ 1 & -j \\ 1 & -0.707 - 0.707\,j \\ 1 & -1 \\ 1 & -0.707 + 0.707\,j \\ 1 & j \\ 1 & 0.707 + 0.707\,j \end{bmatrix} \Rightarrow \tilde{F} = \frac{1}{\sqrt{8}} \begin{bmatrix} 1 & 0.707 - 0.707\,j \\ 1 & -0.707 - 0.707\,j \\ 1 & -0.707 + 0.707\,j \\ 1 & 0.707 + 0.707\,j \end{bmatrix}$$

La matrice $\tilde{\mathbf{A}}$ s'exprime alors sous la forme suivante :

$$\tilde{\mathbf{A}} = \frac{1}{\sqrt{8}} \begin{bmatrix} 1 & 0.707 - 0.707\,j & 1 & 0.707 - 0.707\,j \\ 1 & -0.707 - 0.707\,j & -1 & 0.707 + 0.707\,j \\ 1 & -0.707 + 0.707\,j & 1 & -0.707 + 0.707\,j \\ 1 & 0.707 + 0.707\,j & -1 & -0.707 - 0.707\,j \end{bmatrix}$$

D'où l'expression de $\tilde{\mathbf{A}}^H$, de $(\tilde{\mathbf{A}}^H\tilde{\mathbf{A}})^+$ et de $(\tilde{\mathbf{A}}^H\tilde{\mathbf{A}})^+\tilde{\mathbf{A}}^H$:

$$\tilde{\mathbf{A}}^H = \frac{1}{\sqrt{8}} \begin{bmatrix} 1 & 1 & 1 & 1 \\ 0.707 + 0.707\,j & -0.707 + 0.707\,j & -0.707 - 0.707\,j & 0.707 - 0.707\,j \\ 1 & -1 & 1 & -1 \\ 0.707 + 0.707\,j & 0.707 - 0.707\,j & -0.707 - 0.707\,j & -0.707 + 0.707\,j \end{bmatrix}$$

$$\left(\tilde{\mathbf{A}}^H\tilde{\mathbf{A}}\right)^+ = \begin{bmatrix} 2 & 0 & 0 & 0 \\ 0 & 2 & 0 & 0 \\ 0 & 0 & 2 & 0 \\ 0 & 0 & 0 & 2 \end{bmatrix}$$

$$\left(\tilde{\mathbf{A}}^H\tilde{\mathbf{A}}\right)^+\tilde{\mathbf{A}}^H = \begin{bmatrix} 0.707 & 0.707 & 0.707 & 0.707 \\ 0.5 + 0.5\,j & -0.5 + 0.5\,j & -0.5 - 0.5\,j & 0.5 - 0.5\,j \\ 0.707 & -0.707 & 0.707 & -0.707 \\ 0.5 + 0.5\,j & 0.5 - 0.5\,j & -0.5 - 0.5\,j & -0.5 + 0.5\,j \end{bmatrix}$$

Second exemple. Les paramètres du système prennent les valeurs suivantes : $N_{FFT}$ =8, $N_{mod}$=6, et $\Delta_t$=2. Le système de transmission comprend $N_t$=3 antennes d'émission et $N_r$=1 antenne de réception. Le nombre de porteuses pilotes $N_P$=4 est insuffisant dans ce cas car la relation $N_t \times \Delta_t \leq N_P$ n'est pas satisfaite. Il est donc nécessaire pour ce système de transmission d'avoir au minimum $N_P$=6, par exemple $N_P$= $N_{mod}$=6. Les sous-porteuses non modulées sont supposées situées aux deux extrémités du spectre. Un seul symbole OFDM est supposé nécessaire à l'estimation de canal, g=1, et le motif de ce symbole OFDM, qui constitue une séquence de référence est représenté sur le Tab. 3. La première colonne représente les indices fréquentiels et la seconde colonne le type de données associé (N porteuse nulle, P symbole pilote).

Tableau 3 Motif des pilotes répartis dans le plan temps-fréquence.

| 0 | N |
|---|---|
| 1 | P |
| 2 | P |
| 3 | P |
| 4 | P |
| 5 | P |
| 6 | P |
| 7 | N |

L'équation (2) donne l'expression du symbole pilote modulant la porteuse p en ce qui concerne la séquence de référence émise par l'antenne d'émission $TX_i$, avec i = 1 2 ou 3 :

$$c(p)^1 = c(p)\, e^{-j2\pi\frac{p(1-1)2}{4}} = c(p)$$

$$c(p)^2 = c(p)\, e^{-j2\pi\frac{p2}{6}} = c(p)\, e^{-jp\frac{2\pi}{3}}$$

$$c(p)^3 = c(p)\, e^{-j2\pi\frac{p\times2\times2}{6}} = c(p)\, e^{-jp\frac{4\pi}{3}}$$

$c(p)^1$ est donc le symbole pilote modulant la fréquence porteuse $p$ en ce qui concerne la séquence de référence émise par l'antenne d'émission $TX_1$, $c(p)^2$ est le symbole pilote modulant la fréquence porteuse $p$ en ce qui concerne la séquence de référence émise par l'antenne d'émission $TX_2$ et $c(p)^3$ est le symbole pilote modulant la fréquence porteuse $p$ en ce qui concerne la séquence de référence émise par l'antenne d'émission $TX_3$.

Pour l'exemple, $c(p) = 1$ pour l'ensemble des porteuses pilotes. Les vecteurs des symboles pilotes $B^1$ $B^2$ et $B^3$ et les vecteurs extraits limités aux porteuses pilotes, $\widetilde{B}^1$, $\widetilde{B}^2$ et $\widetilde{B}^3$ s'expriment alors sous la forme :

$$\mathbf{B}^1 = \begin{bmatrix} 0 \\ 1 \\ 1 \\ 1 \\ 1 \\ 1 \\ 1 \\ 0 \end{bmatrix} \Rightarrow \widetilde{\mathbf{B}}^1 = \begin{bmatrix} 1 \\ 1 \\ 1 \\ 1 \\ 1 \\ 1 \end{bmatrix} \qquad \mathbf{B}^2 = \begin{bmatrix} 0 \\ 1 \\ e^{-j\frac{2\pi}{3}} \\ e^{-j\frac{4\pi}{3}} \\ e^{-j\frac{6\pi}{3}} \\ e^{-j\frac{8\pi}{3}} \\ e^{-j\frac{10\pi}{3}} \\ 0 \end{bmatrix} \Rightarrow \widetilde{\mathbf{B}}^2 = \begin{bmatrix} 1 \\ e^{-j\frac{2\pi}{3}} \\ e^{-j\frac{4\pi}{3}} \\ 1 \\ e^{-j\frac{8\pi}{3}} \\ e^{-j\frac{10\pi}{3}} \end{bmatrix} \qquad \mathbf{B}^3 = \begin{bmatrix} 0 \\ 1 \\ e^{-j\frac{4\pi}{3}} \\ e^{-j\frac{8\pi}{3}} \\ e^{-j\frac{12\pi}{3}} \\ e^{-j\frac{16\pi}{3}} \\ e^{-j\frac{20\pi}{3}} \\ 0 \end{bmatrix} \Rightarrow \widetilde{\mathbf{B}}^3 = \begin{bmatrix} 1 \\ e^{-j\frac{4\pi}{3}} \\ e^{-j\frac{8\pi}{3}} \\ 1 \\ e^{-j\frac{4\pi}{3}} \\ e^{-j\frac{2\pi}{3}} \end{bmatrix}$$

La matrice de Fourier F est la suivante :

$$\mathbf{F} = \frac{1}{\sqrt{8}} \begin{bmatrix} 1 & 1 & 1 & 1 & 1 & 1 & 1 & 1 \\ 1 & 0.707-0.707j & -j & -0.707-0.707j & -1 & -0.707+0.707j & j & 0.707+0.707j \\ 1 & -j & -1 & j & 1 & -j & -1 & j \\ 1 & -0.707-0.707j & j & 0.707-0.707j & -1 & 0.707+0.707j & -j & -0.707+0.707j \\ 1 & -1 & 1 & -1 & 1 & -1 & 1 & -1 \\ 1 & -0.707+0.707j & -j & 0.707+0.707j & -1 & 0.707-0.707j & j & -0.707-0.707j \\ 1 & j & -1 & -j & 1 & j & -1 & -j \\ 1 & 0.707+0.707j & j & -0.707+0.707j & -1 & -0.707-0.707j & -j & 0.707-0.707j \end{bmatrix}$$

dans laquelle le symbole $j$ représente l'unité imaginaire, c'est-à-dire la solution de l'équation j²=-1. Les matrices F' et $\widetilde{F}$' s'expriment sous la forme suivante :

$$F' = \frac{1}{\sqrt{8}} \begin{bmatrix} 1 & 1 \\ 1 & 0.707-0.707j \\ 1 & -j \\ 1 & -0.707-0.707j \\ 1 & -1 \\ 1 & -0.707+0.707j \\ 1 & j \\ 1 & 0.707+0.707j \end{bmatrix} \Rightarrow \tilde{F}' = \frac{1}{\sqrt{8}} = \begin{bmatrix} 1 & 0.707-0.707j \\ 1 & -j \\ 1 & -0.707-0.707j \\ 1 & -1 \\ 1 & -0.707+0.707j \\ 1 & j \end{bmatrix}$$

La matrice $\tilde{\mathbf{A}}$ s'exprime alors sous la forme suivante :

$$\widetilde{\mathbf{A}} = \frac{1}{\sqrt{8}} \begin{bmatrix} \widetilde{\mathbf{B}}_{\mathrm{diag}}^{1} \widetilde{\mathbf{F}}' & \widetilde{\mathbf{B}}_{\mathrm{diag}}^{2} \widetilde{\mathbf{F}}' & \widetilde{\mathbf{B}}_{\mathrm{diag}}^{3} \widetilde{\mathbf{F}}' \end{bmatrix}$$

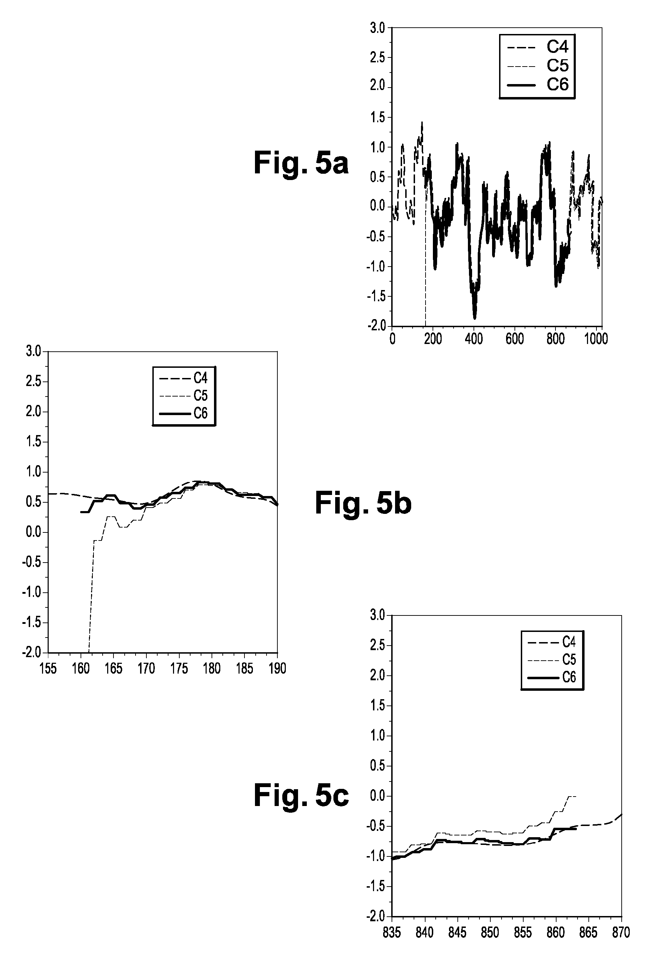

Les figure 4, 5a, 5b et 5c donnent des résultats de simulation qui permettent de comparer les performances respectives de la technique connue de Barhumi et d'un procédé selon l'invention. Les simulations se rapportent à un système MIMO OFDM en considérant un canal BRAN E sélectif en temps et en fréquence et adapté à un contexte MIMO type environnement extérieur et dont les caractéristiques sont rassemblées dans le tableau 4 en Annexe B. La trame prise en compte est celle décrite dans l'article de Barhumi ; l'ensemble des porteuses modulées est divisé en deux sous-ensembles disjoints : un ensemble des porteuses pilotes et un ensemble des données utiles.

La figure 4 donne le tracé du taux d'erreur binaire (TEB ou BER selon la terminologie anglo-saxonne) dans le cas d'une modulation 16-QAM avec un décalage $\Delta t$ égal à 128. L'estimation des canaux effectuée aux fréquences pilotes est complétée par une interpolation linéaire en temps pour estimer l'ensemble des coefficients pour les différentes fréquences modulées. La courbe 1, c1, correspond à une estimation parfaite, la courbe 2, c2, correspond à une estimation selon Barhumi et la courbe 3, c3, à une estimation selon l'invention. La comparaison des courbes permet de constater que le procédé selon l'invention présente avantageusement un taux d'erreur binaire inférieur à celui de la méthode de Barhumi pour un même rapport signal à bruit et, en outre, cette différence augmente avec l'augmentation du rapport signal à bruit.

La figure 5a donne le tracé de la partie réelle du coefficient du canal en fonction de l'indice de la porteuse qui varie de 0 à 1023 sachant que la transformée de Fourier (FFT) a une taille de 1024 échantillons et que le rapport Eb/N0 est égal à 20dB. Les figures 5b et 5c sont un zoom en fréquence du tracé de la figure 5a autour des indices de porteuses nulles, respectivement en bordure inférieur du spectre (155 à 190) et en bordure supérieur du spectre (835 à 870), sachant que les porteuses nulles correspondent aux indices 0 à 159 et 864 à 1023. La courbe 1, c4, correspond aux valeurs vraies des coefficients du canal, la courbe 2, c5, correspond à une estimation selon Barhumi et la courbe 3, c6, à une estimation selon l'invention. La courbe c2 présente, comme indiqué précédemment dans la description de l'art antérieur, des effets de bord importants dans le voisinage des porteuses nulles de bord de spectre ; autour des indices de porteuse 160 et 863. Ces effets ne sont pas observés avec un procédé selon l'invention.

Annexe A

Tableau 1

| Type de trame utilisée | [Teng] | [Moon], [Larsson], [Baek] | [Barhumi] |
|---|---|---|---|
| Taille de la fenêtre FFT | 1024 | | |
| Nombre de symboles OFDM dans une trame | 32 | | |
| Porteuses modulées | 704 | | |
| Données utiles | 75% | 84.4% | 88.6% |
| Symboles pilotes | 18.75 % | 9.4% | 5.1% |
| Autres (garde, synchro) | 6.25 % | | |
| Données modulées | 22528 | | |

Annexe B

Tableau 4

| | |
|---|---|
| $N_t$ | 2 |
| $N_r$ | 2 |
| Fréquence porteuse | 5200 MHz |
| Fréquence d'échantillonnage | 50 MHz |
| Espacement entre porteuse | 48.828125 kHz |
| Ratio du Préfixe Cyclique | 0.211 |
| Temps d'un symbole OFDM | 24.8 $\mu$s |
| Longueur du code convolutif | 7 |
| Rendement du code | 1/2 |
| Algorithme de décodage de canal | SOVA |
| Taille de FFT | 1024 |
| Nombre de symboles OFDM par trame | 32 |
| Porteuses modulées | 704 |
| Porteuses nulles | 320 |
| Données utiles | 19968 |
| Symboles pilotes | 1152 |
| Autres (Synchro, Garde) | 1408 |
| Données | 22528 |

**Revendications**

1. Procédé (1) d'estimation des canaux de transmission dans un système (SY) multi-antennes mettant en oeuvre $N_t$ antennes d'émission (TX$_1$,...,TXN$_t$), où $N_t$ est supérieur ou égal à 2, au moins une antenne de réception (RX$_1$,..., RX$_{Nr}$), une trame temps fréquence par antenne d'émission comprenant des symboles pilotes (sp) formant une séquence d'apprentissage et des symboles de données (sd) d'un signal utile, les $N_t$ séquences d'apprentissage, décalées temporellement entre elles, sont connues du récepteur (RE) et permettent à ce dernier d'estimer $N_t$

réponses impulsionnelles correspondant aux $N_t$ canaux de transmission séparant respectivement une antenne d'émission ($TX_1$,...,$TX_{Nt}$) de l'antenne de réception considérée $Rx_j$, les symboles de données et les symboles pilotes étant modulés en fréquence par un multiplexeur orthogonal ($MX_1$,...,$MX_{Nt}$) pour former des symboles orthogonaux qui sont émis par les antennes d'émission sous la forme d'un signal multi porteuses à $N_{FFT}$ porteuses avec Np porteuses pilotes et des porteuses nulles, comprenant :

- une étape de calcul d'une matrice A construite sous forme de blocs à partir des séquences d'apprentissage et de la matrice de Fourier de dimensions $N_{FFT}$x $N_{FFT}$, et comprenant,
pour une antenne de réception considérée $Rx_j$,
- une étape de calcul des $N_t$ réponses impulsionelles dans le domaine temporel en multipliant Np symboles pilotes, extraits d'un signal fréquentiel $R^j(n)$ obtenu après démodulation d'un signal temporel reçu par l'antenne de réception considérée $Rx_j$ au moyen d'une FFT de taille $N_{FFT}$, avec un produit de matrices comprenant le pseudo inverse du produit de l'hermitien de la matrice A par A permettant d'effectuer une décorrélation des porteuses modulées voisines de porteuses nulles.

**2.** Procédé (1) d'estimation des canaux de transmission selon la revendication 1 dans lequel le calcul des $N_t$ réponses impulsionelles est limité aux $N_p$ porteuses pilotes.

**3.** Procédé (1) d'estimation des canaux de transmission selon la revendication 2 dans lequel le produit de matrice s'exprime par la relation :

- $(A^HA)^+A^H$ avec $A^H$ l'hermitien de la matrice A et $^+$ désignant le pseudo inverse.

**4.** Procédé (1) d'estimation des canaux de transmission selon l'une des revendications 2 et 3 dans lequel le calcul des $N_t$ réponses impulsionelles est étendu aux porteuses modulées par des données au moyen d'une interpolation.

**5.** Procédé (1) d'estimation des canaux de transmission selon l'une des revendications 1 à 4 dans lequel l'étape de calcul des $N_t$ réponses impulsionelles est répétée pour chaque antenne de réception considérée du système multi-antennes.

**6.** Module d'estimation (EsT) des canaux de transmission dans un système (SY) multi-antennes mettant en oeuvre $N_t$ antennes d'émission ($TX_1$,...,$TX_{Nt}$), où $N_t$ est supérieur ou égale à 2, au moins une antenne de réception ($RX_1$,..., $RX_{Nr}$), une trame temps fréquence par antenne d'émission comprenant des symboles pilotes (sp) formant une séquence d'apprentissage et des symboles de données (sd) d'un signal utile, les $N_t$ séquences d'apprentissage, décalées temporellement entre elles, sont connues du récepteur (RE) et permettent à ce dernier d'estimer $N_t$ réponses impulsionelles correspondant aux $N_t$ canaux de transmission séparant respectivement une antenne d'émission ($TX_1$,...,$TX_{Nt}$) de l'antenne de réception considérée $Rx_j$, les symboles de données et les symboles pilotes étant modulés en fréquence par un multiplexeur orthogonal ($MX_1$,...,$MX_{Nt}$) pour former des symboles orthogonaux qui sont émis par les antennes d'émission sous la forme d'un signal multi porteuses à $N_{FFT}$ porteuses avec Np porteuses pilotes et des porteuses nulles, **caractérisé en ce qu'**il comprend, :

- des moyens pour calculer une matrice A construite sous forme de blocs à partir des séquences d'apprentissage et de la matrice de Fourier de dimensions $N_{FFT}$x $N_{FFT}$ et, pour une antenne de réception considérée $Rx_j$,
- des moyens pour calculer $N_t$ réponses impulsionelles dans le domaine temporel en multipliant Np symboles pilotes, extraits d'un signal fréquentiel $R^j(n)$ obtenu après démodulation d'un signal temporel reçu par l'antenne de réception considérée $Rx_j$ au moyen d'une FFT de taille $N_{FFT}$, avec un produit de matrices comprenant le pseudo inverse du produit de l'hermitien de la matrice A par A permettant d'effectuer une décorrélation des porteuses modulées voisines de porteuses nulles.

**7.** Récepteur (RE) pour un système (SY) multi-antennes **caractérisé en ce qu'**il comprend un module d'estimation (EsT) des canaux de transmission selon la revendication 6.

**8.** Système (SY) multi-antennes **caractérisé en ce qu'**il comprend un récepteur (RE) comprenant un module d'estimation (EsT) des canaux de transmission selon la revendication 6.

**9.** Programme d'ordinateur sur un support d'informations, ledit programme comportant des instructions de programme adaptées à la mise en oeuvre d'un procédé (1) d'estimation de canaux selon l'une quelconque des revendications 1 à 5, lorsque ledit programme est chargé et exécuté dans un récepteur (RE).

**10.** Support d'informations comportant des instructions de programme adaptées à la mise en oeuvre d'un procédé (1) d'estimation de canaux, selon l'une quelconque des revendications 1 à 5, lorsque ledit programme est chargé et exécuté dans un récepteur (RE).

**Fig. 1a**     **Fig. 1b**     **Fig. 1c**

**Fig. 2**

**Fig. 3**

**Fig. 4**

**Fig. 5a**

**Fig. 5b**

**Fig. 5c**

**Office européen des brevets**

**RAPPORT DE RECHERCHE EUROPEENNE**

Numéro de la demande

EP 07 11 5033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | BARHUMI I ET AL: "Optimal training design for MIMO OFDM systems in mobile wireless channels" IEEE TRANSACTIONS ON SIGNAL PROCESSING, IEEE SERVICE CENTER, NEW YORK, NY, US, vol. 51, no. 6, juin 2003 (2003-06), pages 1615-1624, XP002284029 ISSN: 1053-587X * page 1615 - page 1619 * ----- | 1-10 | INV. H04L25/02 |
| A | US 2003/072254 A1 (MA JIANGLEI [CA] ET AL) 17 avril 2003 (2003-04-17) * figures 3,7-10 * ----- | 1-10 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 19 septembre 2007 | Horbach, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 07 11 5033

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2007

| Document brevet cité au rapport de recherche | Date de publication | Membre(s) de la famille de brevet(s) | Date de publication |
|---|---|---|---|
| US 2003072254    A1 | 17-04-2003 | WO    03034644 A1<br>CN    1605172 A<br>EP    1442549 A1<br>US 2007053282 A1 | 24-04-2003<br>06-04-2005<br>04-08-2004<br>08-03-2007 |

EPO FORM P0460

# EP 1 898 581 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **J. MOON ; H. JIN ; T. JEON ; S.-K. LI.** Channel estimation for MIMO-OFDM Systems employing Spatial Multiplexing. *Vehicular Technology Conference,* Septembre 2004, vol. 5
- **E.G. LARSSON ; J. LI.** Preamble Design for Multiple-Antenna OFDM-Based WLANs With Null Subcarriers. *IEEE Signal Processing,* 2006, vol. 13 (5
- **M.-S.BAEK ; H.-J. KOOK ; M.-J. KIM ; Y.-H. YOU ; H-S. SONG.** Multi-Antenna Scheme for High Capacity Transmission in the Digital Audio Broadcasting. *IEEE Transactions on Broadcasting,* Décembre 2005, vol. 51 (4
- **I. BARHUMI ; G. LEUS ; M. MOONEN.** Optimal Training Design for MIMO OFDM Systems in Mobile Wireless Channels. *IEEE Transactions on Signal Processing,* Juin 2003, vol. 51 (6